# EUROPEAN PATENT APPLICATION

(11) **EP 2 320 337 A2**
(43) Date of publication of application: **11.05.2011**
(21) Application number: 10172143.9
(22) Date of filing: 06.08.2010
(51) Int. Cl.: G06F 17/30

(54) **User interface apparatus using three-dimensional axes and user interface apparatus using two-dimensional planes formed by three-dimensional axes**

(30) Priority: 05.11.2009 KR 20090106594
(71) Applicant: Pantech Co., Ltd., Seoul 121-270 (KR)
(72) Inventor: Park, Chan-Joo, 401-303, Seoul (KR); Won, Kyung-Sun, 104-406, Seoul (KR); Lee, Eun-Mi, 103-1504, Seoul (KR); Kim, Dae-Heum, 2431, Gyeonggi-do (KR); Choi, Kyeong-Min, 101-402, Seoul (KR); Oh, Ik-Sung, Gyeonggi-do (KR)
(74) Representative: Herzog, Markus

(57) **Abstract**

A user interface apparatus using three-dimensional axes and a user interface apparatus using two-dimensional planes, each of the two-dimensional planes being formed by two of three-dimensional axes, are provided. The user interface apparatus uses the three-dimensional axes or the two-dimensional planes to select a menu or to search for desired information in a device, such as a mobile terminal.

## Description

### CROSS REFERENCE TO RELATED APPLICATION

This application claims priority from and the benefit under 35 U.S.C. § 119(a) of Korean Patent Application No. 10-2009-0106594, filed on November 5, 2009, the disclosure of which is incorporated herein by reference for all purposes.

### BACKGROUND

1. FIELD

The following description relates to a user interface for user input/output.

2. DISCUSSION OF THE BACKGROUND

A conventional mobile communication terminal having multi-level submenus subordinate to a main menu in a tree structure to be two-dimensionally viewed requires a user to perform a plurality of user input operations to enter a desired submenu.

Furthermore, when a user searches for information, such as a telephone number, in the mobile communication terminal, the user repeats selecting operations a number of times. Hence, there has been a need of a method for minimizing the number of user input operations in the mobile communication terminal.

### SUMMARY

Exemplary embodiments of the present invention provide a user interface apparatus that decreases the number of user inputs in a mobile communication terminal using three-dimensional axes or two-dimensional planes, each two-dimensional plane formed by two of the three-dimensional axes.

Exemplary embodiments of the present invention provide a user interface apparatus using three-dimensional axes, the user interface apparatus including at least one primary item provided along one of the three-dimensional axes, and at least one secondary item provided along another axis other than the axis along which the primary item is provided.

Additional features of the invention will be set forth in the description which follows, and in part will be apparent from the description, or may be learned by practice of the invention.

An exemplary embodiment provides a user interface apparatus using three-dimensional axes, the user interface apparatus including an operating portion to select a primary item provided on a first axis among the three-dimensional axes, and a plurality of secondary items provided along a second axis different from the first axis, the plurality of second items being related to the primary item selected by the operating portion.

An exemplary embodiment provides a user interface apparatus using two-dimensional planes, each two-dimensional plane formed by two of three-dimensional axes, the user interface apparatus including at least one primary item provided on at least a first two-dimensional plane, and at least one secondary item provided on a second two-dimensional plane other than the first two-dimensional plane on which the at least one primary item is provided.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating an example of a user interface apparatus using three-dimensional axes.

FIG. 2 is a diagram illustrating an example of a search screen of the user interface apparatus of FIG. 1.

FIG. 3 is a diagram illustrating another example of a search screen of the user interface apparatus of FIG. 1.

FIG. 4 is a diagram illustrating another example of a user interface apparatus using three-dimensional axes.

FIG. 5 is an example of a search screen of a user interface apparatus using three-dimensional axes.

FIG. 6 is a diagram illustrating another example of a user interface apparatus using two-dimensional planes, each of which is formed by two of the three-dimensional axes.

FIG. 7 is a diagram illustrating an example of a search screen of the user interface apparatus of FIG. 6.

FIG. 8 is a diagram illustrating an example of a search result display screen of the user interface apparatus of FIG. 7.

Throughout the drawings and the detailed description, unless otherwise described, the same drawing reference numerals are understood to refer to the same elements, features, and structures. The relative size and depiction of these elements may be exaggerated for clarity, illustration, and convenience.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

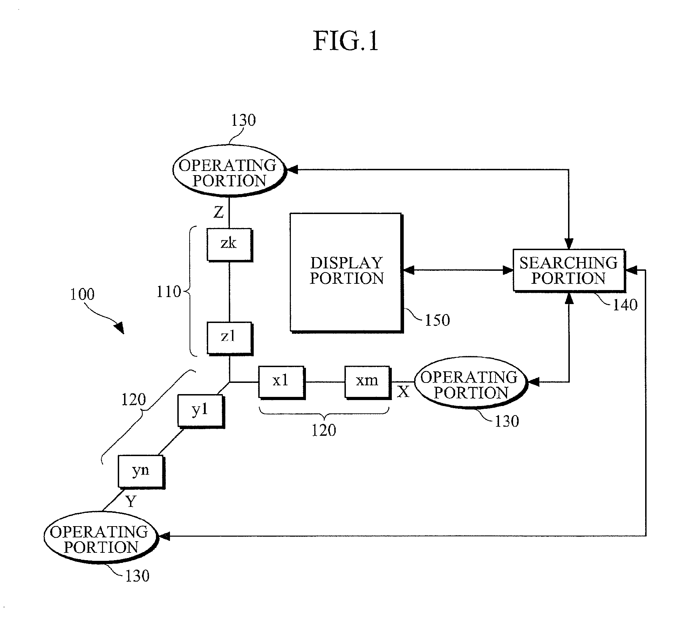

FIG. 1 illustrates an example of a user interface apparatus 100 using three-dimensional axes. Referring to FIG. 1, the user interface apparatus 100 includes at least one primary item 110 and at least one secondary item 120. The primary item 110 is represented or displayed along at least one axis of the three-dimensional axes. The secondary item 120 is represented or displayed along at least one axis of the three-dimensional axes other than the axis on which the primary item 110 is provided. The secondary item 120 may be subordinate to the primary item 110 or may be independent of the primary item 110.

As shown in FIG. 1, the primary items 110 including z1 and zk are represented along a Z-axis of the three-dimensional axes, the secondary items 120 including x1 and xm are represented along an X-axis, and the secondary items 120 including y1 and yn are represented along a Y-axis.

Accordingly, the primary items 110 and the secondary items 120 can be simultaneously displayed on a screen of a device, such as a mobile communication terminal, and thus, the user interface apparatus 100 can reduce the number of user input operations used to access various menus and submenus compared to the conventional interface apparatus that requires a user to enter submenus a number of times to obtain a desired result.

In an example, the user interface apparatus 100 may further include at least one operating portion 130. The operating portion 130 controls movement of the primary items 110 or the secondary items 120.

The operating portions 130 may be disposed at ends of the respective axes. The operating portions 130 may control the primary items 110 or the secondary items 120 to move in a circular manner or to scroll continuously through or along the primary items 110 or the secondary items 120. Referring to the example shown in FIG. 1, the operating portions 130 are respectively located at the ends of the X-axis, the Y-axis, and the Z-axis.

The operating portions 130 may be configured to move at least one of the primary items 110 or at least one of the secondary items 120 in response to detecting a user's touch. Alternatively, the operating portions 130 may be configured to move at least one of the primary items 110 or at least one of the secondary items 120 in a forward direction or a reverse direction according to a direction of the user's touch. Hence, a display currently being viewed can be changed by the operating portions 130 that move the primary items 110 or the secondary items 120.

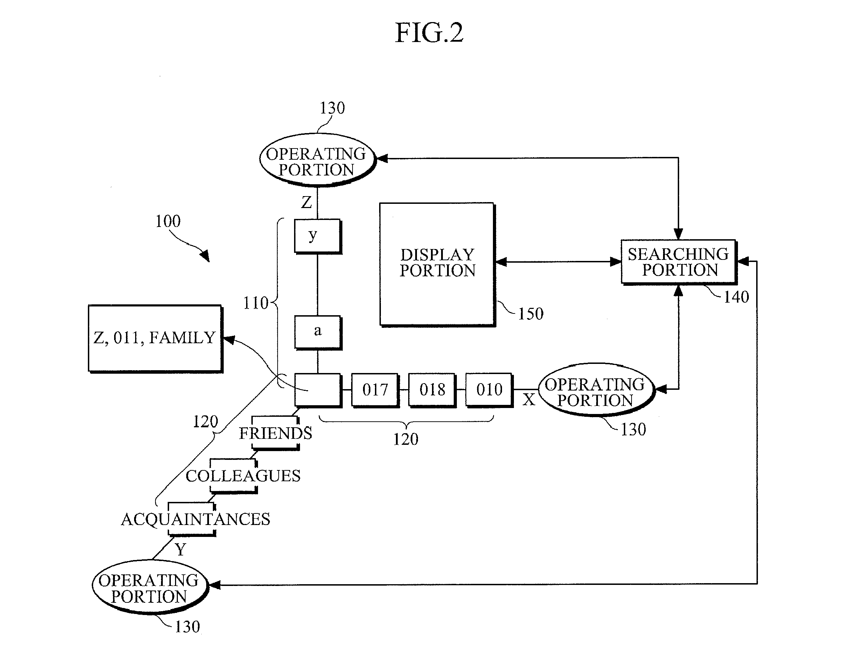

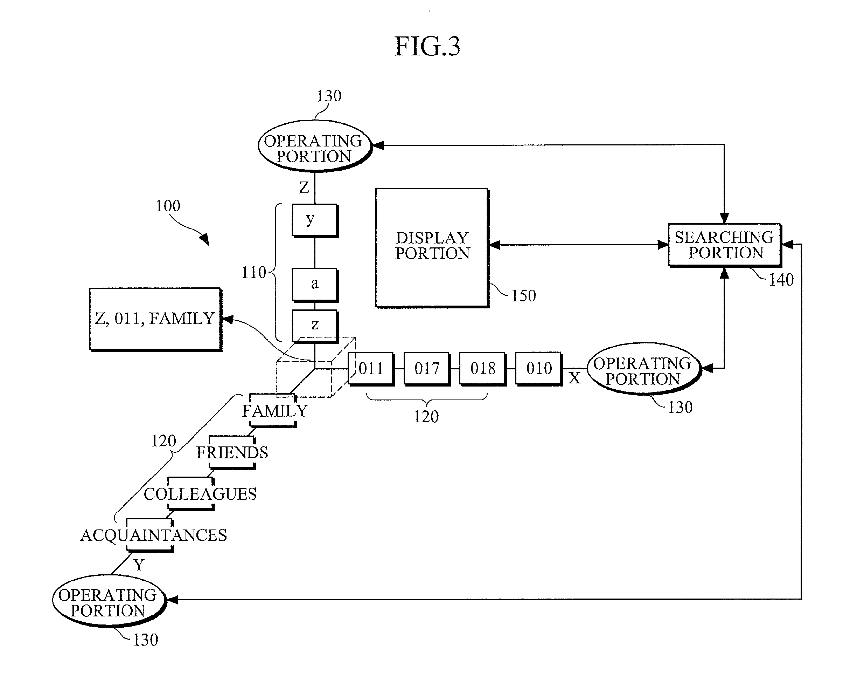

In an example, the user interface apparatus 100 may further include a searching portion 140. FIG. 2 and FIG. 3 illustrate examples of a search screen of the user interface apparatus 100 shown in FIG. 1.

As shown in FIG. 2, the searching portion 140 may be configured to search for information corresponding to the primary items 110 and the secondary items 120 which meet at an intersection point of the three-dimensional axes. Each of the primary items 110 and the secondary items 120 may be a searchable category. For example, it is assumed for a telephone number search that the primary items 110 are initial letters of names in an alphabetical order, a through z, and provided along the Z-axis, the secondary items 120 are telephone office numbers, such as '011', '017', '018', and '010', and provided along the X-axis, and the secondary items 120 describe relations with the user, such as 'family', 'friends', 'colleagues', and 'acquaintances', and are provided along the Y-axis.

When at least one of primary items 110 along the Z-axis and at least one of the secondary items 120 along the X-axis or the Y-axis are moved according to the operation of the operating portions 130 and, as the result, the primary item 'z' and the secondary items '011', and 'family' meet at the intersection point of the three-dimensional axes, the searching portion 140 searches to find information corresponding to the items, 'z', '011', and 'family'.

Unlike the above example shown in FIG. 2, the searching portion 140 shown in FIG. 3 searches to find information corresponding to the primary items 110 and the secondary items 120, each of which is located at specific coordinates, each spaced a specific distance from the intersection point of the three-dimensional axes.

For example, it is assumed for a telephone number search that the primary items 110 are initial letters of names in an alphabetical order, a through z, and represented along the Z-axis, the secondary items 120 are telephone office numbers, such as '011', '017', '018', and '010', and represented along the X-axis, and the secondary items 120 describe relations with the user, such as 'family', 'friends', 'colleagues', and 'acquaintances', and are represented along the Y-axis.

When at least one of primary items 110 along the Z-axis and at least one of the secondary items 120 along the X-axis or Y-axis are moved according to the operation of the operating portions 130 and, as the result, the primary item 'z' and the secondary items '011', and 'family' meet at the coordinates obtained by moving along each of the X-axis, the Y-axis, and the Z-axis to be one unit from the intersection point of the three dimensional axes, the searching portion 140 searches to find information corresponding to the factors, 'z', '011', and 'family'.

Therefore, the user interface apparatus 100 allows the user to search for desired information with a decreased number of user inputs using the three-dimensional axes, compared to the conventional interface apparatus that requires a user to enter submenus a number of times to obtain a desired result.

In an example, the user interface apparatus 100 may further include a display portion 150. The display portion 150 displays a search result of the searching portion 140. For example, the display portion 150 may be configured to display a search result on at least one of two-dimensional planes including the X-Y plane, the Y-Z plane, and the X-Z plane. Alternatively, the display portion 150 may be configured to display a search result in a manner that the result is shown as overlaying at least one of the two-dimensional planes. Referring to the examples shown in FIG. 2 and FIG. 3, the display portion 150 displays the search result of the searching portion 140 on the two-dimensional plane formed by the X-axis and Z-axis.

Hence, the user interface apparatus 100 may allow the user to search for desired information with a decreased number of user inputs by using three-dimensional axes in a device, such as a mobile communication terminal.

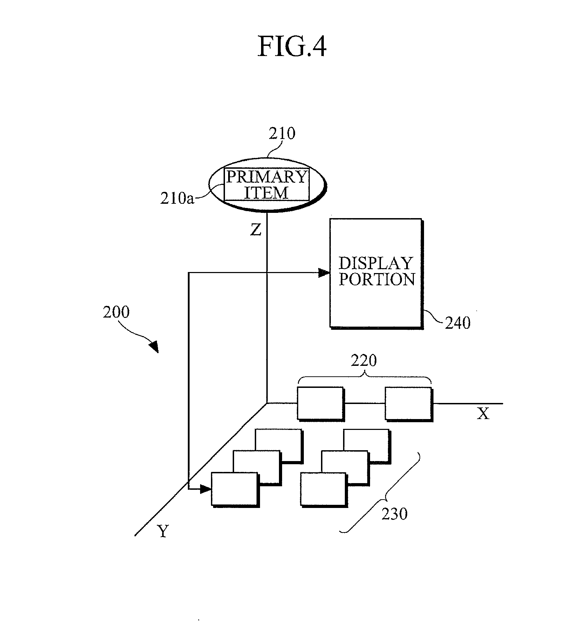

FIG. 4 illustrates another example of a user interface apparatus 200 using three-dimensional axes. Referring to FIG. 4, the user interface apparatus 200 includes an operating portion 210, a selected primary item 210a, and secondary items 220.

The operating portion 210 selects the primary item 210a located on one of the three-dimensional axes according to a user's operation. For example, the operating portion 210 may be located at an end of any of the three-dimensional axes. Referring to the example shown in FIG. 4, the operating portion 210 is located at the end of the Z-axis, and the primary item 210a, which is currently selected, is displayed in the operating portion 210.

For example, the primary item 210a displayed in the operating portion 210 may be selected by operating the operating portion 210 in response to detecting a user's touch. In addition, the operating portion 210 may be configured to move the primary item 210a in a forward or a reverse direction according to a direction of the user's touch.

The secondary items 220 are displayed along another axis than the axis on which the primary item 210a is located. The secondary items 220 are related to the primary item 210a selected by the operating portion 210. The secondary items 220 may be submenus of the selected primary item 210a. Hence, when compared with the conventional method in which a user enters submenus a number of times to reach a desired menu, the user interface apparatus 200 shown in the above example may allow the user to access a desired menu with a decreased number of inputs by operating the operating portion 210 to move the secondary items 220 related to the primary item 210a using the three-dimensional axes.

In an example, the user interface apparatus 200 may further include a group of tertiary items 230. The tertiary items 230 are aligned on or in a same plane on or in which the secondary items 220 are placed, and the tertiary items 230 may be related to the secondary items 220. The tertiary items 230 may be submenus of the selected primary item 210a and/or submenus of one or more of the secondary items 220. Further, the tertiary items 230 may be content associated with the selected primary item 210a and/or one or more of the secondary items 220.

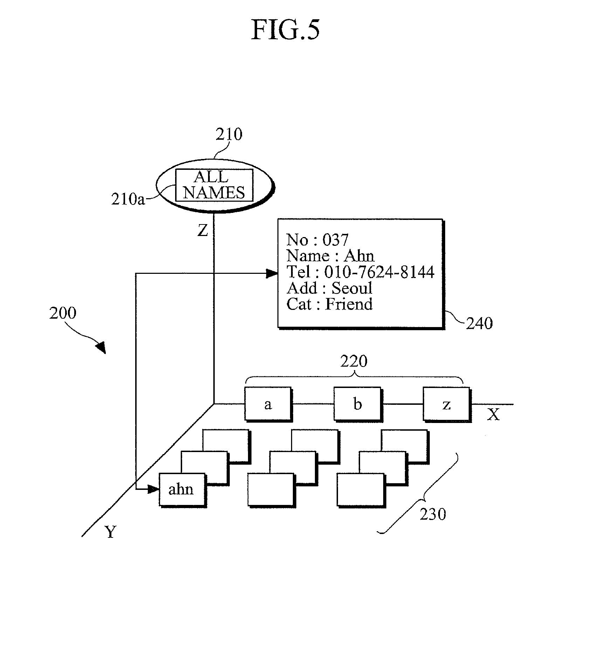

FIG. 5 illustrates an example of a search screen of a user interface apparatus using three-dimensional axes. As shown in FIG. 5, it is assumed for a telephone search that an operating portion 210 is provided at an end of the Z-axis. It is also assumed that a primary item 210a displayed in the operating portion 210 is selected by operating the operating portion 210 in response to detecting a user's touch.

Referring to the example shown in FIG. 5, when the primary item 210a includes 'all names', 'family', 'friends', 'colleagues', 'acquaintances', and 'others', and 'all names' is selected and displayed as the primary item 210a in the operating portion 210, letters a through z are displayed as the secondary items 220 along the X-axis and all names starting with the respective letters a through z are aligned on or in the X-Y plane as tertiary items 230.

In addition, the tertiary items 230 may correspond to a secondary item 220 that is selected by the user's touch. That is, in the example shown in FIG. 5, when the user touches one of the secondary items 220, the tertiary items 230 in connection with the selected secondary item 220 are displayed. The tertiary items 230 may be submenus of the selected primary item 210a and/or submenus of one or more of the secondary items 220. Further, the tertiary items 230 may be content associated with the selected primary item 210a and/or one or more of the secondary items 220. The tertiary items 230 may also be searchable categories.

In another example, the user interface apparatus 200 may further include a display portion 240. The display portion 240 displays detailed information of a tertiary item 230 that is selected by a user's touch.

When the user touches one of the tertiary items 230, the display unit 240 displays detailed information of the selected tertiary item 230, and thus the user is enabled to obtain the final specific information.

Accordingly, the user interface apparatus 200 allows the user to search for desired information with a decreased number of user inputs, and displays the found information using three-dimensional axes in a device, such as a mobile terminal.

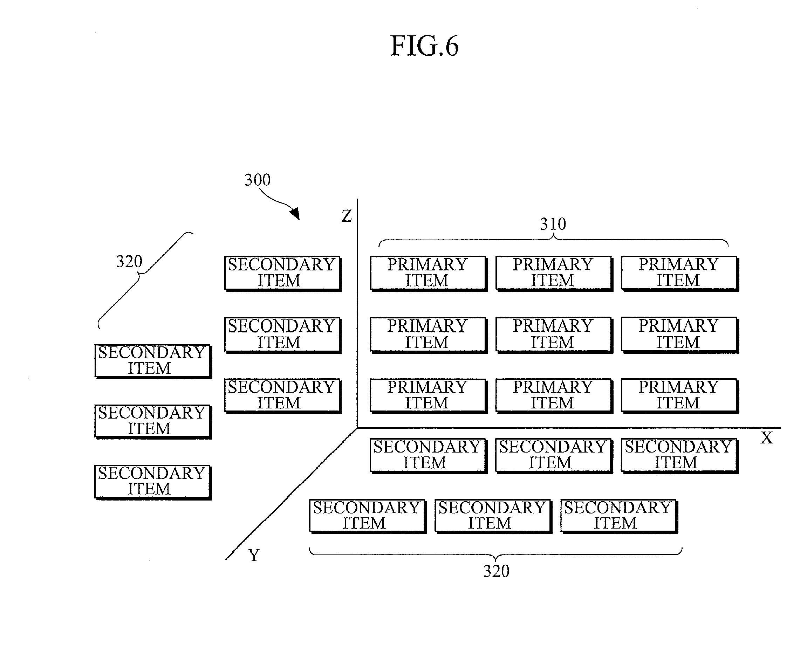

FIG. 6 illustrates an another example of a user interface apparatus 300 using two-dimensional planes, each of which is formed by two of the three-dimensional axes. Referring to the example shown in FIG. 6, the user interface apparatus 300 includes at least one primary item 310, and at least one secondary item 320.

The primary item 310 is provided on or in one of the two-dimensional planes, each of which is formed by two of the three-dimensional axes.

The secondary item 320 is provided on or in another of the two-dimensional planes other than the plane on or in which the primary item 310 is provided.

The secondary item 320 may be subordinate to the primary item 310, or be independent of the primary item 310. The secondary item 320 may be a submenu of the primary item 310. Further, the primary item 310 and the secondary item 320 may be searchable categories and/or searchable content.

Referring to the example shown in FIG. 6, a plurality of primary items 310 are aligned on or in a two-dimensional plane formed by the X-axis and the Z-axis, a plurality of secondary items 320 are aligned on or in a two-dimensional plane formed by the X-axis and the Y-axis, and a plurality of secondary items 320 are aligned on or in a two-dimensional plane formed by the Y-axis and the Z-axis.

Accordingly, the user interface apparatus 300 displays the primary items 310 and the secondary items 320 simultaneously on the two-dimensional planes, each of which is formed by two of the three-dimensional axes.

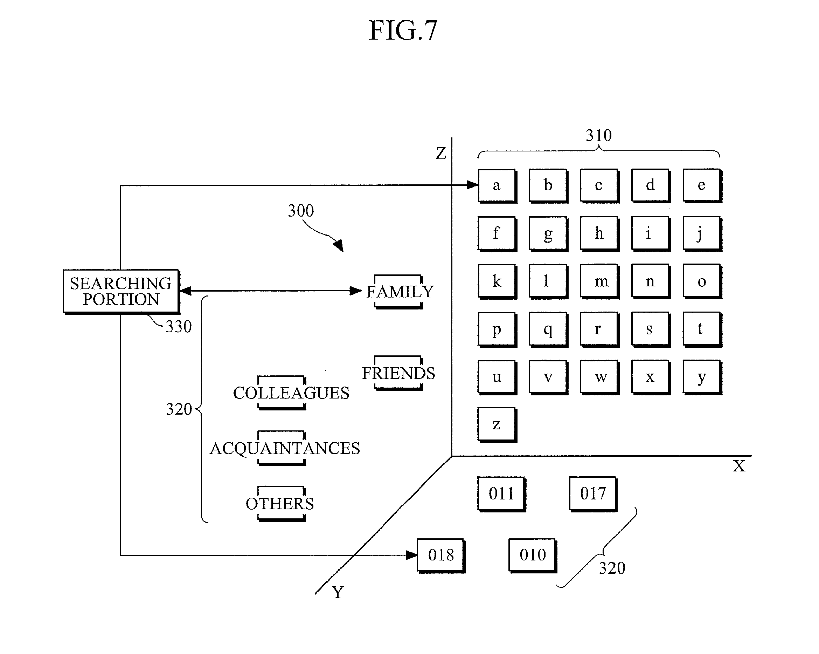

In an example, the user interface apparatus 300 using two-dimensional planes, each formed by two of the three-dimensional axes, may further include a searching portion 330 (referring to FIG. 7). The searching portion 330 searches for information corresponding to the primary item 310 or the secondary item 320 which is selected on or in a two-dimensional plane.

FIG. 7 illustrates an example of a search screen of a user interface apparatus 300 using two-dimensional planes, each of which is formed by two of the three-dimensional axes. As shown in FIG. 7, it is assumed for a telephone number search that the initial letters of names in an alphabetical order, a through z, are provided as primary items 310 on a two-dimensional plane formed by the X-axis and the Z-axis, telephone office numbers, '011', '017', '018', and '010', are provided as the secondary items 320 on a two-dimensional plane formed by the X-axis and the Y-axis, and the relations with a user, 'family', 'friends', 'colleagues', 'acquaintances', and 'others', are provided as secondary items 320 on a two-dimensional plane formed by the Y-axis and the Z-axis.

When 'a' is selected on the two-dimensional plane formed by the X-axis and the Z-axis, '018' is selected on the two-dimensional plane formed by the X-axis and the Y-axis, and 'family' is selected on the two-dimensional plane formed by the Y-axis and the Z-axis in response to a user's touch operations, the searching portion 330 searches for information corresponding to 'a', '018', and 'family'.

Therefore, when compared to the conventional method that uses a number of operations of entering into submenus for obtaining a desired result, the user interface apparatus 300 may allow the user to search for desired information.

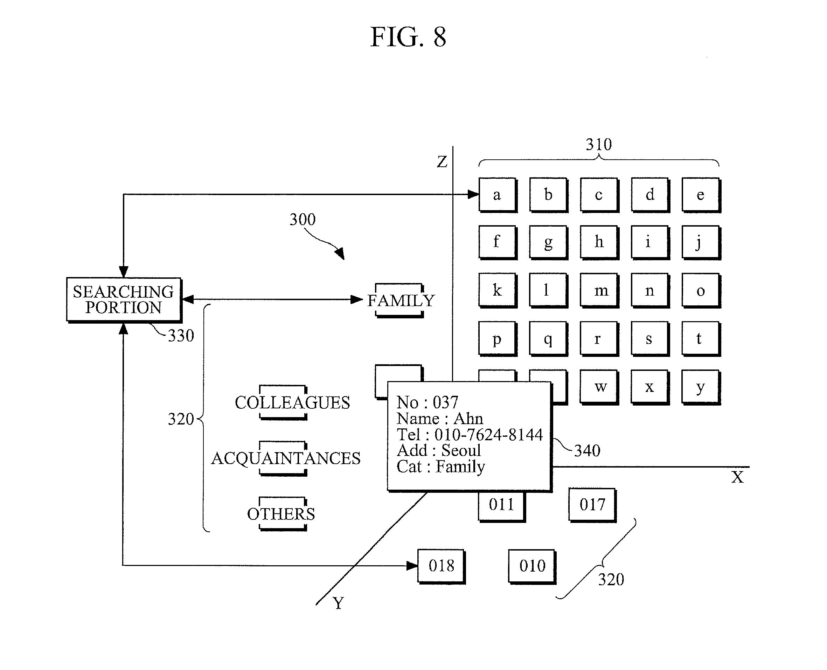

FIG. 8 illustrates an example of a search screen of the user interface apparatus 300 shown in FIG. 7. Referring to the example shown in FIG. 8, a display portion 340 displays a search result of the searching portion 330. The display portion 340 may be configured to display the search result in a manner that the search result is shown as overlaying at least one of the two-dimensional planes. The display portion 340 is displayed as overlaying all of two-dimensional planes, which are respectively formed by the X-axis and the Z-axis, by the X-axis and the Y-axis, and by the Y-axis and the Z-axis.

Thus, the user interface apparatus 300 enables the user to search for desired information with a decreased number of inputs using the two-dimensional planes, each formed by two of the three-dimensional axes, and displays the search result.

As described above, a user interface apparatus using three-dimensional axes or two-dimensional planes, each formed by two of the three-dimensional axes, may decrease a number of user's inputs when the user selects a menu or searches for desired information.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A user interface apparatus using three-dimensional axes and a user interface apparatus using two-dimensional planes, each of the two-dimensional planes being formed by two of three-dimensional axes, are provided. The user interface apparatus uses the three-dimensional axes or the two-dimensional planes to select a menu or to search for desired information in a device, such as a mobile terminal.

## Claims

1. A user interface apparatus, comprising
a display to display three-dimensional axes, the three-dimensional axes defining a first two-dimensional plane, a second two-dimensional plane, and a third two-dimensional plane; and
either a first primary item provided along a first axis among the three-dimensional axes, and a first secondary item provided along a second axis among the three-dimensional axes,
or a first primary item provided first two-dimensional plane, and a first secondary item provided on the second two-dimensional plane.

2. The user interface apparatus of claim 1, further comprising:
an operating portion to control movement of the first primary item or the first secondary item.

3. The user interface apparatus of claim 1 or 2, further comprising:
a searching portion to search for information corresponding to the first primary item and the first secondary item,
the first primary item and the first secondary item preferably either meeting at an intersection point of the three-dimensional axes according to an operation of the operating portion,
or being both located at specific coordinates, each spaced a specific distance from an intersection point of the three-dimensional axes.

4. The user interface apparatus of claim 3, further comprising:
a display portion to display a search result of the searching portion.

5. The user interface apparatus of claim 4, wherein the display portion displays the search result on a first two-dimensional plane formed by two of the three-dimensional axes.

6. The user interface apparatus of claim 4, wherein the display portion displays the search result as overlaying at least two two-dimensional planes, each two-dimensional plane formed by two of the three-dimensional axes.

7. The user interface apparatus of any of claims 2 to 6, wherein the operating portion moves the first primary item or the first secondary item in response to a user's touch.

8. The user interface apparatus of claim 7, wherein the operating portion moves the first primary item or the first secondary item in a forward direction or a reverse direction according to a direction of the user's touch.

9. The user interface apparatus of any of claims 1 to 8, wherein the first primary item is a menu and the first secondary item is a submenu of the menu.

10. The user interface apparatus of any of claims 1 to 9, wherein the first primary item and the first secondary item are each a searchable category.

11. The user interface apparatus of any of claims 1 to 10, further comprising an operating portion to select said first primary item provided on said first axis among the three-dimensional axes; and said first secondary item being related to said first primary item.

12. The user interface apparatus of claim 15, further comprising:
a first tertiary item provided on a two-dimensional plane defined by at least the second axis, the first tertiary item being related to the first secondary item.
the first tertiary item preferably being related to the first secondary item selected according to a user's touch.

13. The user interface apparatus of claim 12, further comprising:
a display portion to display information of the first tertiary item.

14. The user interface apparatus of any of claims 1 to 13, further comprising:
a second secondary item provided on the third two-dimensional plane.
